# EUROPEAN PATENT SPECIFICATION

(11) **EP 3 161 091 B1**
(45) Date of publication and mention of the grant of the patent: **03.10.2018**
(21) Application number: 14732915.5
(22) Date of filing: 26.06.2014
(51) Int. Cl.: C09J 125/00

(54) **HOT-MELT ADHESIVE AND USE THEREOF**
HEISSSCHMELZKLEBER UND VERWENDUNG
ADHÉSIF THERMOFUSIBLE ET UTILISATION

(43) Date of publication of application: 03.05.2017
(73) Proprietor: IP & Patent Management UG (haftungsbeschränkt), 28205 Bremen (DE)
(72) Inventor: SCHNEIDER, Jörg, 28197 Bremen (DE)
(74) Representative: Scholz, Volker
(86) International application number: PCT/EP2014/063586
(87) International publication number: WO 2015/197125

(56) References cited:
- EP-A1- 1 564 274
- WO-A1-94/07967
- US-A1- 2007 088 116

## Description

The present invention relates to the use of a hot-melt adhesive for adhesive bonding of packaging and a packaging system comprising the hot-melt adhesive.

Traditionally the formation of multiple containers for beverages or food to form a pack of various items (in the following abbreviated as "multipack") has only been possible by the employment of a shrink sleeve film, cardboard outer wrap or a mechanical locking / holding arrangement.

There are inherent problems with the shrink sleeve multipack arrangement in that the individual containers are difficult to remove. Often sharp tools are used to open the secondary packaging with the result that without purpose the product containers are damaged. The cardboard overwrap can also be problematic as the construction can be unstable, particularly with heavier shaped containers.

Both methods (shrink sleeve and cardboard) or other secondary packaging involve the use of packaging materials in addition to the beverage or food container, leading to higher levels of packaging waste.

Hot-melt adhesives are widely used for various commercial and industrial applications such as product assembly and packaging. Such hot-melt adhesives are applied to a substrate while in its molten state and cooled to harden the adhesive layer.

Current commercial hot-melt adhesive formulations do not provide the necessary performance characteristics necessary for application.

To fulfil this function, the adhesive must display a very high level of cohesive strength, heat resistance and provide good levels of adhesion to the container in transit and storage in a wide variety of ambient conditions. But when the multipack reaches the consumer, the individual containers have to be relatively easy to be separated allowing individual consumption of the contents of the containers.

An adhesive mixture has to have sufficient adhesion to the substrates to hold the containers together in a broad range of ambient conditions, including high and low temperatures, high and low humidity and environments with high UV exposure. The adhesive mixture must also have sufficient flexibility to allow expansion in the adhesive joint as the container expands and contracts during its exposure to the different prevailing environmental conditions.

The adhesive must be able to be applied easily in a high speed automated process, concurrent with a modern high speed beverage or food filling or processing line / machine.

Therefore, it is an object of the present invention to provide adhesive mixtures for adhering packagings, for example containers, such as PET-bottles, cans or glass bottles having sufficient durability and adhesion to hold the container together until the consumer desires separation.

Further, a hot-melt adhesive mixture for use in the temporary bonding, attachment and collation of multiple containers, preferably for beverages or food, to form a pack of various items in an automated application process, without the use of secondary / external packaging, overcoming drawbacks of the prior art shall be provided.

The purpose of this invention is further to provide the multipack arrangement (packaging system) but greatly reducing the amount of packaging material used in the formation.

The object has been achieved by use of a hot-melt adhesive for adhesive bonding of at least a first packaging and a second packaging, the hot-melt adhesive comprising: (a) 7-70 parts per weight, preferably 20-60 parts by weight, more preferred 30-50 parts per weight, even more preferred 35-45 parts by weight, of a polymer component, the polymer component comprising a first styrene block copolymer and a second styrene block copolymer, the first styrene block copolymer and the second styrene block copolymer having a different styrene content; (b) 15-60 parts per weight, preferably 25-50 parts per weight, even more preferred 35-45 parts per weight, of a tackifying component; (c) 5-30 parts per weight, preferably 5-25 parts per weight, of a plasticizer compo-nent; and d) 0.02 -- 1.2 parts per weight of a stabilizer component.

A hot-melt adhesive in terms of the present invention shall be understood as a form of thermoplastic adhesive. Hot-melt adhesives are also known in the art as hot glues. A hot-melt adhesive is solid at room temperature and is melted to then being applied to the surface to be adhered. By cooling the melted hot-melt adhesive, strong adhesive bonding is achieved.

Adhesive bonding in terms of the present invention is applying to an intermediate layer to connect substrates of different materials. In the inventive use, the intermediate layer is formed by the hot-melt adhesive. The connected substrates are the packagings to be connected.

The inventive use relates to adhesive bonding of at least two packagings. However, the inventive use relates also to adhesive bonding of more than two packagings. In this embodiment, each packaging is connected to at least another packaging by adhesive bonding using the hot-melt adhesive as defined in the inventive use.

In general, any packaging can be applied in the inventive use. Packaging shall be understood as a material used for enclosing or protecting products for distribution, storage, sale, and use.

Preferably, the packaging is a foodstuff packaging, preferably a foodstuff container, more preferably a bottle or can, most preferably a plastic bottle.

In the preferred embodiment, wherein the packaging is a bottle, the term bottle shall be understood broadly and encompass PET-bottles, glas-bottles, cans etc.

Moreover preferred, the polymer component further comprises an alpha-alkyl styrene, preferably an alpha- C1-C4-alkyl styrene, most preferred alpha-methyl styrene.

Preferably, the first styrene block copolymer has a styrene content of 25-35%, preferably 27-33%, even more preferred 28-32%, further preferred 29-31%, most preferred about 30%, relating to the total number of monomer units comprised in the first styrene block copolymer.

Also preferred, the second styrene block co-polymer has a styrene content of 10-20%, preferably 12-18%, even more preferred 13-17%, further preferred 14-16%, most preferred about 15%, relating to the total number of monomer units comprised in the second styrene block copolymer.

More preferred, the first styrene block copolymer is comprised in the hot-melt adhesive in an amount of 10-35 parts per weight, preferably 10-30 parts per weight, most preferred 15-25 parts per weight.

Even preferred, the second styrene block co-polymer is comprised in the hot-melt adhesive in an amount of 10-35 parts per weight, preferably 10-30 parts per weight, most preferred 15-25 parts per weight.

Preferably, the total styrene content in the polymer component is from 1-45 wt%, preferably 3-30 wt%, more preferred 5-15 wt%, even more preferred 7-13 wt%, particularly preferred 8-12 wt%, most preferred 6-10 wt%, relating to the total weight of the hot-melt adhesive.

It is further preferred that the alpha-alkyl styrene polymer is comprised in the hot-melt adhesive in an amount of 0.1-5 parts per weight, preferably 1-4.5 parts per weight, more preferably 1-4 parts per weight, even more preferred 1-3 parts per weight, moreover preferred about 2 parts per weight, most preferred in an amount not exceeding 5 wt% relating to the total weight of the hot-melt adhesive.

More preferred, the first styrene block copolymer and the second styrene block copolymer are formed by the same monomer units and only differ in having a different styrene content.

A copolymer shall be understood as polymers comprising two or more different monomer units.

Preferably, the polymer compound further comprises ethylene-butyl-acrylate/vinyl-acetate copolymer.

A block-copolymer is a special kind of copolymer made of blocks of different polymerized monomers.

Further preferred, the styrene block copolymer is polystyrene-block-polyolefin, preferably is polystyrene-block-poly(ethylene-RAN-butylene)-block-polystyrene, with RAN meaning random distribution of ethylene and butylene, or polystyrene-block-polybutadiene-block-polystyrene, optionally hydrogenated.

Preferably, the tackifying component comprises thermoplastic adhesive resin, aliphatic hydrocarbon, cycloaliphatic hydrocarbon, aromatic hydrocarbon, the respective hydrocarbon optionally being modified and/or hydrogenated, terpenes, the terpenes optionally being modified or hydrogenated, rosins, the rosins optionally being modified or hydrogenated, or mixtures thereof.

"Modified" in terms of the present invention shall be understood in a way that a substance is modified if it is chemically altered in a way that the original characteristics of the substance are not essentially influenced. For example, modified can be modified by minor changes in the substitution pattern of the modified compound.

Thermoplastics in terms of the present invention are polymers which become pliable or moldable above a specific temperature and which return to a solid state upon cooling.

Moreover preferred, the plasticizer compound comprises paraffinic oil, naphthenic oil, polybuten, poly-butadiene, dibasic ester, polyol or mixtures thereof.

A dibasic ester in terms of the present invention is an ester of a dicarboxylic acid.

A plasticizer in terms of the present invention shall be understood as an additive increasing the plasticity of fluidity of a material.

Preferably, the stabilizer is a light stabilizer, preferably is a sterically hindered phenolic antioxidant and/or a sterically hindered amine, most preferably is pentaerythritol tetrakis (3-(3,5-di-tert-butyl-4-hydroxyphenyl)propionate).

In general, stabilizers, are compounds which prevent, when being comprised in a polymer, various effects, such as oxidation, chain scission, uncontrolled recombinations and crosslinking reactions that are caused by, for example, photo-oxidation of polymers. Light stabilizers are, therefore, to be understood as compounds to be used to avoid effects coming along when being exposed to electromagnetic radiation, particularly light.

The problem has further been solved by a packaging system, essentially comprising at least two packagings and a hot-melt adhesive; wherein each packaging is connected to at least one other packaging by adhesive bonding, the adhesive bonding being made by the hot-melt adhesive, and the hot-melt adhesive being the hot-melt adhesive as defined for the inventive use.

The inventive packaging system is essentially comprised of two or more packagings being adhered together by using the hot-melt adhesive as defined herein. Essentially comprising shall be understood that no other means to build a multipack arrangement of the packaging, such as shrink sleeve or cardboard overwrap, are necessary. Nevertheless, presence of such materials for decoration purpose or the like is not excluded. Just as little other decoration elements, brands, labels or technical means for solving another problem etc. are excluded.

Preferably, the packaging in the packaging system is a foodstuff packaging, preferably a foodstuff container, more preferably a bottle.

The problem has further been solved by the hot-melt adhesive resultant from mixing the above ingredients a, b, c and d together having a density of between 0.790 - 1.2 g/cm³, a melt flow index of 15 - 4000 g/min (1 kg at 200°C), a viscosity of 160°C between 200 and 11,000, preferably 10,000 cPs, measured by using a Brookfield RVT visometer, spindle SC-4-27, according to ASTM D3236 (1999), a Shore hardness in the range of 15 and 70 A at 23°C according to ASTM D2240, and a softening point determined by ASTM E28 above 40°C and not greater than 158°C.

Preferably, the hot-melt adhesive compound is obtainable from an inventive hot-melt adhesive mixture the mixture comprising ingredients and as defined above. More preferably, the hot-melt adhesive is obtainable by blending.

Most preferably, the inventive hot-melt adhesive mixture and/or the inventive hot-melt adhesive have a relatively flat elastic modulus from -20°C to 50°C, extremely good heat stability, Tg of about -32°C, fogging temperature above 100°C, low volatiles content over 0,10% after two hours at 110°C, viscositiy at 160°C of about 700 - 4000 mPas or mixtures thereof.

In terms of the present invention, an extremely good heat stability of the inventive hot-melt adhesive mixture is provided when the adhesive has an oxidation reduction time, determined by ASTM E 3895-98 of 12 minutes, preferably 12.28 minutes, or greater at 150°C.

In terms of the present invention, the hot melt mixture has a low volatiles content when having a volatile emission measured in percentage terms of 0.1% or less, according to ASTM E 595-93. In this way, fogging or coating of the substrates with low molecular weight hydrocarbons during the application of the adhesive is avoided.

In a preferred embodiment, the inventive hot-melt adhesive mixture and/or the inventive hot-melt adhesive having a high level of cohesive strength, heat resistance, good adhesion to the preferably beverage and/or food containers in transit and storage in a wide variety of ambient conditions. At the same time, when a multipack (meaning a plurality of packings adhesive bound by means of the hot-melt adhesive) reaches the consumers the hot-melt adhesive specific properties enables the consumers to separate easily the containers allowing individual consumption of the contents of the containers.

A "good adhesion" in terms of the present invention is meant to be an adhesion between the bound packagings allowing secure storage and transport of the bound packagings but also allowing easy separation of the packagings without undue body strength or tools. In particular preferred is an adhesion of 15N/25mm or less, preferably 10N/25mm or less, most preferred 5N/25mm or less, determined by peel adhesion (180°) or loop tack (23°C) methods.

The adhesive mixture herein mentioned has been carefully designed and constructed to pro-vide sufficient durability and adhesion to hold the containers together until the consumer desires separation.

The object has also been solved by inventive use of the hot-melt adhesive mixture and/or the hot-melt adhesive, in particular for adhering multiple containers for beverages or food to form a pack of various items in an automated application process, without the use of secondary / external packaging.

In further preferred embodiments, ingredients a to d of the hot-melt adhesive applied in the inventive use may be:
(a) A polymer component comprising two of styrenic block co-polymers including styrene ethylene styrene, styrene ethylene propylene, styrene isoprene styrene (SIS), styrene butylene styrene (SBS), ethylene butyl acrylate/ vinyl acetate or particularly preferred polystyrene-block-poly(ethylene-RAN-butylene)-block-polystyrene as the first styrene block copolymer and the second styrene block copolymer. It is particularly preferred in this regard that the first styrene block copolymer and the second styrene block copolymer are the same styrenic block co-polymer. For example, it might be preferred that the polymer component comprises two kinds of polystyrene-block-poly(ethylene-RAN-butylene)-block-polystyrene each having a different styrene content.
(b) A tackifying component comprising adhesive resins, aliphatic, cycloaliphatic and aromatic hydrocarbons and modified hydrocarbons and hydrogenated versions; terpenes and modified terpenes and hydrogenated versions; rosins and rosin derivatives and hydrogenated versions; and mixtures thereof. These tackifying resins have a ring and ball softening point from 70 °C to 150 °C, and will typically have a viscosity at 350 °F (177 °C) as measured using a Brookfield viscometer, of no more than 2000 cPs (20 grams/cm second).
(c) A plasticizer component comprising of Paraffinic or napthenic oils, Polybutene or dibasic esters and/or Polyols.
(d) A stabilizer component comprising a sterically hindered phenolic antioxidant and a sterically hindered amine light stabilizer.

By common knowledge this mixture is referred to as a hot-melt adhesive.

Due to the nature of the application each named component may be comprised of a singular component or a blend of components in order to achieve the desired properties.

Surprisingly it was found that the inventive mixtures and compounds have the advantage of greatly reducing the amount of packaging in a multipack construction while providing a stable multipack which is easily separated by the consumer.

The adhesive blend can be made in a heated mixing vessel of the planetary type, z blade or ribbon type. Heat must be applied to the walls of the vessel evenly to avoid thermal degradation during processing. Processing temperature is in the 100 - 160°C range. A vacuum should be applied during the blending process to avoid the incorporation of air. The mixture can also be prepared using a single screw or twin screw extruder with a heated barrel using moderate shear rates.

In very preferred embodiments, the hot-melt mixture for inventive use is achieved from a mixture of:
(a) a polymer component comprising a blend of two A-B-A Hydrogenated Styrene/butadiene co-polymers, a commercially known example of this product is the Kraton G series of polymers. The Kraton G series of polymers includes commercially available co-polymers differing in their content of styrene comprised therein. The use of two of these polymers differing in their styrene content is particularly preferred for inventive use;
(b) a tackifying component comprising, preferably consisting of a blend of Polydicyclopentadiene (PDCPD) polymer resin, formed through opening metathesis polymerisation (ROMP) which have a ring and ball softening point from 70 to 150°C, and will typically have a viscosity of 350°F (177°C) as measured using a Brookfield viscosimeter, of no more then 3000 centipoise (20 grams / cm second), a commercially known example of this product is Escorez 5000 series;
(c) a plasticizer component comprising of paraffinic oils, a commercially available example of this product is Primol 352; and
(d) a stabilizer (end block reinforcing) component comprising of sterically hindered phenolic antioxidant and sterically hindered amine light stabilizer.

Preferably, the hot-melt adhesive further comprises alpha methyl styrene (AMS).

By common knowledge this mixture is referred to as a hot-melt adhesive.

The inventive effect may be traced back to interactions of the compounds as described below in detail. However, this rather scientific discussion shall merely be understood to facilitate the understanding of the invention without having any limiting effect on the scope of the invention.

The use of A-B-A hydrogenated styrene butadiene block copolymer with a hydrogenated midblock in conjunction with the PDCPD and AMS polymers is deemed to provide the desired properties.

The alpha methyl styrene polymer being purely aromatic in nature only has the ability to act upon the styrene domain of the ABA block co-polymers. This effect is greatly enhanced by the fact that this range of block co-polymers has a saturated midblock when compare to a traditional SIS or SBS block co-polymer.

This has the effect of increasing the cohesive strength and heat resistance of the adhesive product without affecting the other properties of the adhesive. The PDCPD polymers act with the mid block only of the block copolymer, providing the level of tack and adhesion needed to fulfil the application.

The plasticizer selected acts upon the adhesive to increase the flexibility and reduce the viscosity to a suitable level without reducing the cohesive strength and thermal resistance of the adhesive to undesirable levels.

This invention relates to the use of a hot-melt adhesive mixture for the temporary bonding, attachment and collation of multiple containers for beverages or food to form a pack of various items in an automated application process, without the use of secondary / external packaging.

A hot-melt adhesive mixture for the joining and collation of multiple containers for beverages or food to form a pack without the use of a shrink sleeve film, cardboard or any other secondary or external packaging.

Upon reaching the consumer the containers can be separated from each other prior to use. The adhesive on the container surface can be removed by mechanical means to aid recycling.

The formulation is containing the following substances in very preferred embodiments:

| | CAS number | Approximate content |
|---|---|---|
| 2. C 5 hydrocarbon resins | 64742-16-1 | 33 % - 42% |
| 3. Oil | 8042-47-5 | 16% - 21 % |
| 4. SEBS rubbers | 66070-58-4 | 34% - 41% |
| 5. Antioxidant | 6683-19-8 | 1% |

### Examples

| Ingredients / Properties | Comparative Example | Example 1 | Example 2 |
|---|---|---|---|
| SEBS Block-copolymer 30% styrene / melt flow index (230°C/5Kg) = 5 | 35 | 21 | 21 |
| SEBS Block-copolymer 15% styrene / melt flow index (230°C/5Kg) = 5 | 0 | 21 | 19 |
| DCPD resin | 40 | 40 | 40 |
| White mineral oil | 24.5 | 16.5 | 16.5 |
| Stabiliser packagae | 0.5 | 0.5 | 0.5 |
| (Poly) alpha methyl styren resin | 0 | 0 | 2 |
| | | | |
| Peel adhesion 180° to PET initial after 24hrs | 2.5 N/25mm | 6.9 N/25mm | 1.5 N/25mm |
| Loop tack initial PET after 24hrs at 23°C | 4 N/25mm | 8 N/25mm | 4 N/25mm |
| Peel adhesion 180° PET after 28 days at 23°C | Not measurable | 4 N/25mm | 1.6 N/25mm |
| Loop tack after 28 days at 23°C | Not measurable | 11.25 N/25mm | 4.54 N/25mm |
| Viscosity @170°C ASTM3236(1999) | 16,400 cPs | 18500 cPs | 10300 cPs |
| Bound Polystyrene content as % total of inventive mixture (as part of polymer) | 10.5 | 9.45 | 9.15 |

Three different hot-melt adhesive compositions were prepared. The ingredients of the compositions and the amounts thereof can be taken from the above table. While Example 1 and Example 2 are hot-melt adhesives according to the invention, the comparative example, merely comprising a single block copolymer, was prepared for comparative manner. The prepared compositions were tested in regard to peel adhesion, loop tack and viscosity.

It was surprisingly found by the inventors that the object underlying the present invention is particularly well achieved when using a mixture of two different styrene block copolymers differing in their styrene content, preferably when further using a (poly)alpha-alkylstyrene. A respective mixture is not commercially available. Therefore, a mixture was provided by a blend of two commercially available products and the additional use of (poly)alpha-methyl styrene resin.

In particular, there were some findings which might explain the inventive effect (without intending to limit the scope of the claims by this explanation). Firstly, the setting speed of the mixture is reduced by increasing the amount of the polystyrene component of the block co-polymer. It was found that after application of the adhesive to the containers, it is essential that the adhesive mixture solidifies rather quickly. Otherwise, it is possible that during the high speed collation process of the containers the containers will move and the packaging system will not be assembled in a uniform nature.

If the levels of polystyrene segment of the polymer are too high, solidification of the adhesive takes place too quickly and the product is not pliable enough after application to allow the containers to push and spread the adhesive layer; as they are collated and pushed together to form the multipack block.

Further, it was found that the polystyrene content in the polymer component is particular preferred between 6 and 10% by the total weight of the adhesive mixture.

In addition, the hot-melt adhesive properties can be further enhanced by the addition of a (poly)alpha-alkyl styrene resin, for example (poly)alpha-methyl styrene resin. This resin can be up to 5 percent of the total weight of the adhesive. If the proportion is significantly higher than 5% of the total weight of the adhesive, the adhesive mixture is not able to provide suitable long-term adhesion leading to undesired separation of the multi-pack block on aging.

By experimentation SEBS polymers were found to be particularly suitable for solving the object. This finding might be reduced to the incorporation of ethylene in the mid-block of the SEBS styrene-block-copolymer, which most likely leads to extreme separation of the phases to the styrene-block-copolymer and a very unique polymer structure.

Further, the incorporation of ethylene in the mid-block of the polymer might enable the resulting mixture to form a suitable level of adhesion on the beverage containers. If their level of adhesion is too high, separation of the multi-pack block of beverage containers is extremely difficult and in some cases impossible without damaging the containers. If the level of adhesion is too low, the containers will separate during transit to the consumer. It has been found in order for the adhesive mixture to function correctly to have a low end and maintain a low residual tack within the operating window of the collated beverage containers. Typically, this would be the ambient prevailing conditions. This may be as low as -20°C and as high as 40°C.

If the inventive adhesive mixture displays a loop tack significantly higher than 10N/25mm within this range, the adhesive bond within the individual containers might be become too strong. In this case, it is extremely difficult to separate the containers from each other. This is especially true when removing the first container from the multi-pack. It was found by experimentation that the stability of the loop tack over wide prevailing ambient conditions was best achievable in the inventive mixture by the use of styrene-ethylene/butadiene-styrene block copolymer (SEBS). Other block co-polymer types (such as SIS and SBS co-polymers) were tried. However, it was found that such use might come along with disadvantages, in particular increased loop tack and peel adhesion varying on aging and variations in temperature.

All documents cited herein are incorporated in their entireties by reference.

The features disclosed in the foregoing description and/or in the claims may, both separately and in any combination thereof, be material for realizing the invention in diverse forms thereof.

## Claims

1. Use of a hot-melt adhesive for adhesive bonding of at least a first packaging and a second packaging wherein the first packaging and the second packaging are connected by means of in intermediate layer formed by the hot-melt adhesive, the hot-melt adhesive comprising:
(a) 7-70 parts per weight, preferably 20-60 parts by weight, more preferred 30-50 parts per weight, even more preferred 35-45 parts by weight, of a polymer component, the polymer component comprising a first styrene block copolymer and a second styrene block copolymer, the first styrene block copolymer and the second styrene block copolymer having a different styrene content;
(b) 15-60 parts per weight, preferably 25-50 parts per weight, even more preferred 35-45 parts per weight, of a tackifying component;
(c) 5-30 parts per weight, preferably 5-25 parts per weight, of a plasticizer component; and
d) 0.02 - 1.2 parts per weight of a stabilizer component.

2. Use according to claim 1, wherein the packaging is a foodstuff packaging, preferably a foodstuff container, more preferably a bottle or a can, most preferably a plastic bottle.

3. Use according to claim 1 or 2, wherein the polymer component further comprises an alpha-alkyl styrene, preferably an alpha- C1-C4-alkyl styrene, most preferred alpha-methyl styrene.

4. Use according to any of the preceding claims, wherein the first styrene block copolymer has a styrene content of 25-35%, preferably 27-33%, even more preferred 28-32%, further preferred 29-31%, most preferred about 30%, relating to the total number of monomer units comprised in the first styrene block copolymer.

5. Use according to any of the preceding claims, wherein the second styrene block copolymer has a styrene content of 10-20%, preferably 12-18%, even more preferred 13-17%, further preferred 14-16%, most preferred about 15%, relating to the total number of monomer units comprised in the second styrene block copolymer.

6. Use according to any of the preceding claims, wherein the first styrene block copolymer is comprised in the hot-melt adhesive in an amount of 10-35 parts per weight, preferably 10-30 parts per weight, most preferred 15-25 parts per weight.

7. Use according to any of the preceding claims, wherein the second styrene block copolymer is comprised in the hot-melt adhesive in an amount of 10-35 parts per weight, preferably 10-30 parts per weight, most preferred 15-25 parts per weight.

8. Use according to any of the preceding claims, wherein the total styrene content in the polymer component is from 1-45 wt%, preferably 3-30 wt%, more preferred 5-15 wt%, even more preferred 7-13 wt%, particularly preferred 8-12 wt%, most preferred 6-10 wt%, relating to the total weight of the hot-melt adhesive.

9. Use according to any of the claims 3 to 6, wherein the alpha-alkyl styrene polymer is comprised in the hot-melt adhesive in an amount of 0.1-5 parts per weight, preferably 1-4.5 parts per weight, more preferably 1-4 parts per weight, even more preferred 1-3 parts per weight, monomer preferred about 2 parts per weight, most preferred in an amount not exceeding 5 wt% relating to the total weight of the hot-melt adhesive.

10. Use according to any of the preceding claims, wherein the first styrene block copolymer and the second styrene block copolymer are formed by the same monomer units and only differ in having a different styrene content.

11. Use according to any of the preceding claims, wherein the styrene block copolymer is polystyrene-block-polyolefin, preferably is polystyrene-block-poly(ethylene-RAN-butylene)-block-polystyrene or polystyrene-block-polybutadiene-block-polystyrene, optionally hydrogenated.

12. Use according to any of the preceding claims, wherein the tackifying component comprises thermoplastic adhesive resin, aliphatic hydrocarbon, cycloaliphatic hydrocarbon, aromatic hydrocarbon, the respective hydrocarbon optionally being modified and/or hydrogenated, terpenes, the terpenes optionally being modified or hydrogenated, rosins, the rosins optionally being modified or hydrogenated, or mixtures thereof.

13. Use according to any of the preceding claims, wherein the plasticizer component comprises paraffinic oils, naphthenic oils, polybuten, polybutadien, dibasic esters, polyols or mixtures thereof.

14. Use according to any of the preceding claims, wherein the stabilizer component is a light stabilizer, preferably as a sterically hindered phenolic antioxidant and/or a sterically hindered amine, most preferably is pentaerythritol tetrakis(3-(3,5-di-tert-butyl-4-hydroxyphenyl)propionate).

15. Packaging system, essentially comprising at least two packagings and a hot-melt adhesive, wherein each packaging is connected to at least one other packaging by adhesive bonding, the adhesive bonding being made by the hot-melt adhesive, and the hot-melt adhesive being the hot-melt adhesive as defined in claim 1.

16. Packaging system according to claim 15, wherein the packaging is a foodstuff packaging, preferably a foodstuff container, more preferably a bottle or a can, most preferably a plastic bottle.

## Patentansprüche

1. Verwendung eines Heißschmelzklebstoffs zum verklebenden Verbinden von mindestens einer ersten Verpackung und einer zweiten Verpackung, wobei die erste Verpackung und die zweite Verpackung durch eine von dem Heißschmelzklebstoff gebildete Zwischenschicht verbunden sind, wobei der Heißschmelzklebstoff umfasst:
(a) 7-70 Gewichtsteile, bevorzugt 20-60 Gewichtsteile, bevorzugter 30-50 Gewichtsteilen, noch bevorzugter 35-45 Gewichtsteile einer Polymerkomponente, wobei die Polymerkomponente ein erstes Styrol Block-Copolymer und ein zweites Styrol Block-Copolymer umfasst, wobei das erste Styrol Block-Copolymer und das zweite Styrol Block-Copolymer einen unterschiedlichen Styrolgehalt haben;
(b) 15-60 Gewichtsteile, bevorzugt 25-50 Gewichtsteile, noch bevorzugter 30-45 Gewichtsteile, einer klebrigmachenden Komponente;
c) 5-30 Gewichtsteile, bevorzugt 5-25 Gewichtsteile, eines Weichmacherbestandteils; und
d) 0,02-1,2 Gewichtsteile einer stabilisierenden Komponente.

2. Verwendung nach Anspruch 1, wobei die Verpackung eine Lebensmittelverpackung, bevorzugt ein Lebensmittelbehälter, bevorzugter eine Flasche oder eine Dose, am bevorzugtesten eine Plastikflasche, ist.

3. Verwendung nach Anspruch 1 oder 2, wobei die Polymerkomponente zusätzlich ein alpha-Alkylstyrol, bevorzugt ein alpha-C1-C4-Alkylstyrol, am bevorzugtesten ein alpha-Methylstyrol, umfasst.

4. Verwendung nach einem der vorangehenden Ansprüche, wobei das erste Styrol Block-Copolymer einen Styrolgehalt von 25-35 %, bevorzugt 27-33 %, bevorzugter 28-32 %, noch bevorzugter 29-31 %, am bevorzugtesten etwa 30 %, bezogen auf die Gesamtzahl der in dem ersten Styrol Block-Copolymer enthaltenden Monomereinheiten, hat.

5. Verwendung nach einem der vorangehenden Ansprüche, wobei das zweite Styrol Block-Copolymer einen Styrolgehalt von 10-20 %, bevorzugt 12-18 %, bevorzugter 13-17 %, noch bevorzugter 14-16 %, am bevorzugtesten etwa 15 %, bezogen auf die Gesamtzahl der in dem zweiten Styrol Block-Copolymer enthaltenden Monomereinheiten, hat.

6. Verwendung nach einem der vorangehenden Ansprüche, wobei das erste Styrol Block-Copolymer in dem Heißschmelzklebstoff in einer Menge von 10-35 Gewichtsteilen, bevorzugt 10-30 Gewichtsteilen, am bevorzugtesten 15-25 Gewichtsteilen, umfasst ist.

7. Verwendung nach einem der vorangehenden Ansprüche, wobei das zweite Styrol Block-Copolymer in dem Heißschmelzklebstoff in einer Menge von 10-35 Gewichtsteilen, bevorzugt 10-30 Gewichtsteilen, am bevorzugtesten 15-25 Gewichtsteilen, umfasst ist.

8. Verwendung nach einem der vorangehenden Ansprüche, wobei der Gesamtstyrolgehalt in der Polymerkomponente von 1-45 Gew.-%, bevorzugt 3-30 Gew.-%, bevorzugter 5-15 Gew.-%, noch bevorzugter 7-13 Gew.-%, insbesondere bevorzugt 8-12 Gew.-%, am bevorzugtesten 6-10 Gew.-%, bezogen auf das Gesamtgewicht des Heißschmelzklebers, ist

9. Verwendung nach einem der Ansprüche 3 bis 6, wobei das alpha-Alkylstyrolpolymer in dem Heißschmelzklebstoff in einer Menge von 0,1-5 Gewichtsteilen, bevorzugt 1-4,5 Gewichtsteilen, bevorzugter 1-4 Gewichtsteilen, noch bevorzugter 1-3 Gewichtsteilen, weiter bevorzugt etwa 2 Gewichtsteilen, am bevorzugtesten in einer Menge, welche 5 Gew.-%, bezogen auf das Gesamtgewicht des Heißschmelzklebstoffs nicht übersteigt, umfasst ist.

10. Verwendung nach einem der vorangehenden Ansprüche, wobei das erste Styrol-Block-Copolymer und das zweite Styrol-Block-Copolymer aus den gleichen Monomer Einheiten gebildet werden und sich nur durch einen unterschiedlichen Styrolgehalt unterscheiden.

11. Verwendung nach einem der vorangehenden Ansprüche, wobei das Styrol Block-Copolymer ein Polystyrol-Block-Polyolefin, bevorzugt ein Polystyrol-Block-Polyethylen-RAN-Butylen)-Block-Polystyrol oder Polystyrol-Block-Polybutadien-Block-Polystyrol, ist, welches optional hydriert ist.

12. Verwendung nach einem der vorangehenden Ansprüche, wobei die klebrigmachende Komponente ein thermoplastisches adhäsives Harz, aliphatischer Kohlenwasserstoff, cyclischer aliphatischer Kohlenwasserstoff, aromatischer Kohlenwasserstoff, wobei die jeweiligen Kohlenwasserstoffe optional modifiziert und/oder hydriert ist, Terpene, wobei die Terpene optional modifiziert oder hydriert sind, Gießharze, wobei die Gießharze optional modifiziert oder hydriert sind, oder Mischungen davon umfasst.

13. Verwendung nach einem der vorangehenden Ansprüche, wobei der Weichmacherbestandteil paraffinische Öle, naphthenische Öle, Polybuten, Polybutadien, dibasische Ester, Polyole oder Mischungen davon umfasst.

14. Verwendung nach einem der vorangehenden Ansprüche, wobei die stabilisierende Komponente ein Lichtstabilisator ist, bevorzugt ein sterisch gehindertes phenolisches Antioxidationsmittel und/oder ein sterisch gehindertes Amin, am bevorzugtesten ein Pentaerythritol tetrakis(3-(3,5-di-tert-butyl-4-hydroxyphenyl)propionat)ist.

15. Verpackungssystem, welches im Wesentlichen mindestens 2 Verpackungen und einen Heißschmelzklebstoff umfasst, wobei jede Verpackung mit mindestens einer anderen Verpackung durch verklebende Bindung verbunden ist, wobei die verklebende Bindung durch den Heißschmelzklebstoff hergestellt wird und der Heißschmelzklebstoff der Heißschmelzklebstoff nach Anspruch 1 ist.

16. Verpackungssystem nach Anspruch 15, wobei die Verpackung eine Lebensmittelverpackung, bevorzugt ein Lebensmittelbehälter, bevorzugter eine Flasche oder eine Dose, am bevorzugtesten eine Plastikflasche, ist.

## Revendications

1. Utilisation d'un adhésif thermofusible pour la liaison adhésive d'au moins un premier emballage et d'un deuxième emballage, le premier emballage et le deuxième emballage étant reliés au moyen d'une couche intermédiaire formée par l'adhésif thermofusible, l'adhésif thermofusible comprenant :
(a) 7 à 70 parties en poids, de préférence 20 à 60 parties en poids, mieux encore 30 à 50 parties en poids, mieux encore 35 à 45 parties en poids, d'un composant polymère, le composant polymère comprenant un premier copolymère séquencé de styrène et un second copolymère séquencé de styrène, le premier copolymère séquencé de styrène et le second copolymère séquencé de styrène ayant une teneur différente en styrène ;
(b) 15 à 60 parties en poids, de préférence 25 à 50 parties par poids, mieux encore 35 à 45 parties par poids d'un composant à pouvoir collant ;
(c) 5 à 30 parties en poids, de préférence 5 à 25 parties en poids d'un composant plastifiant ; et
(d) 0,02 à 1,2 partie en poids d'un composant stabilisant.

2. Utilisation selon la revendication 1, l'emballage étant un emballage alimentaire, de préférence un contenant alimentaire, mieux encore une bouteille ou une canette, idéalement une bouteille en plastique.

3. Utilisation selon la revendication 1 ou 2, le composant polymère comprenant de plus un styrène alpha-alkyle, de préférence un styrène alpha-alkyle-C1-C4, idéalement un alpha-méthylstyrène.

4. Utilisation selon l'une quelconque des revendications précédentes, le premier copolymère séquencé de styrène ayant une teneur en styrène de 25 à 35 %, de préférence de 27 à 33 %, mieux encore de 28 à 32 %, mieux encore de 29 à 31 %, idéalement d'environ 30 %, par rapport au nombre total d'unités monomères comprises dans le premier copolymère séquencé de styrène.

5. Utilisation selon l'une quelconque des revendications précédentes, le deuxième copolymère séquencé de styrène ayant une teneur en styrène de 10 à 20%, de préférence de 12 à 18 %, mieux encore de 13 à 17 %, mieux encore de 14 à 16 %, idéalement d'environ 15 %, par rapport au nombre total d'unités monomères comprises dans le deuxième copolymère séquencé de styrène.

6. Utilisation selon l'une quelconque des revendications précédentes, le premier copolymère séquencé de styrène étant compris dans l'adhésif thermofusible à hauteur de 10 à 35 parties en poids, de préférence de 10 à 30 parties en poids, idéalement de 15 25 parties en poids.

7. Utilisation selon l'une quelconque des revendications précédentes, le deuxième copolymère séquencé de styrène étant compris dans l'adhésif thermofusible à hauteur de 10 à 35 parties en poids, de préférence de 10 à 30 parties en poids, idéalement de 15 25 parties en poids.

8. Utilisation selon l'une quelconque des revendications précédentes, la teneur totale en styrène dans le composant polymère étant comprise entre 1 et 45 % en poids, de préférence entre 3 et 30 % en poids, mieux encore entre 5 et 15 % en poids, mieux encore entre 7 et 13 % en poids, mieux encore entre 8 et 12 % en poids, idéalement entre 6 et 10 % en poids par rapport au poids total de l'adhésif thermofusible.

9. Utilisation selon l'une des revendications 3 à 6, le polymère styrène alpha-alkyle étant compris dans l'adhésif thermofusible à hauteur de 0,1 à 5 parties en poids, de préférence de 1 à 4,5 parties en poids, mieux encore de 1 à 4 parties en poids, mieux encore de 1 à 3 parties en poids, mieux encore d'environ 2 parties en poids, idéalement dans une quantité maximum de 5 % en poids du poids total de l'adhésif thermofusible.

10. Utilisation selon l'une quelconque des revendications précédentes, le premier copolymère séquencé de styrène et le deuxième copolymère séquencé de styrène étant constitués des mêmes unités monomères et se distinguant l'un de l'autre uniquement par une teneur différente en styrène.

11. Utilisation selon l'une quelconque des revendications précédentes, le copolymère séquencé de styrène étant un bloc de polystyrène-polyoléfine, de préférence un bloc de polystyrène-bloc de poly(éthylène-RAN-butylène)-polystyrène ou un bloc de polystyrène-bloc de polybutadiène-polystyrène, en option hydrogéné.

12. Utilisation selon l'une quelconque des revendications précédentes, le composant à pouvoir collant comprenant une résine adhésive thermoplastique, un hydrocarbure aliphatique, un hydrocarbure cycloaliphatique, un hydrocarbure aromatique, les hydrocarbures respectifs étant en option modifiés et/ou hydrogénés, des terpènes, les terpènes étant en option modifiés ou hydrogénés, des colophanes, les colophanes étant en option modifiées ou hydrogénées, ou des mélanges de ces éléments.

13. Utilisation selon l'une quelconque des revendications précédentes, le composant plastifiant comprenant des huiles paraffiniques, des huiles naphténiques, un polybutène, un polybutadiène, des esters dibasiques, des polyols ou des mélanges de ces éléments.

14. Utilisation selon l'une quelconque des revendications précédentes, le composant stabilisant étant un photo-stabilisant, de préférence sous forme d'un antioxydant phénolique à encombrement stérique et/ou d'un amine à encombrement stérique, idéalement un tétrakis(3-(3,5-di-tert-butyl-4-hydroxyphényl)propionate) de pentaérythritol.

15. Système d'emballage comprenant essentiellement au moins deux emballages et un adhésif thermofusible dans lequel chaque emballage est relié à au moins un autre emballage au moyen d'une liaison adhésive, ladite liaison adhésive étant réalisée grâce à un adhésif thermofusible et l'adhésif thermofusible étant l'adhésif thermofusible tel que défini à la revendication 1.

16. Système d'emballage selon la revendication 15, dans lequel l'emballage est un emballage alimentaire, de préférence un contenant alimentaire, mieux encore une bouteille ou une canette, idéalement une bouteille en plastique.
